# EUROPÄISCHE PATENTSCHRIFT

(11) **EP 2 900 418 B1**
(45) Veröffentlichungstag und Bekanntmachung des Hinweises auf die Patenterteilung: **05.12.2018**
(21) Anmeldenummer: 13762436.7
(22) Anmeldetag: 09.09.2013
(51) Int. Cl.: B23Q 3/155, B25J 15/00

(54) **WERKZEUGGREIFER FÜR EINEN WERKZEUGHALTER, WERKZEUGMAGAZIN UND WERKZEUGMASCHINE**
WORKTOOL GRIPPER FOR A WORKTOOL HOLDER, WORKTOOL MAGAZINE AND MACHINE TOOL
SYSTEME DE PREHENSION D'OUTILS POUR UN SUPPORT D'OUTIL, MAGASIN D'OUTILS ET MACHINE OUTIL

(30) Priorität: 26.09.2012 DE 102012109065
(43) Veröffentlichungstag der Anmeldung: 05.08.2015
(73) Patentinhaber: Chiron-Werke GmbH & Co. KG, 78532 Tuttlingen (DE)
(72) Erfinder: PRUST, Dirk, 78532 Tuttlingen (DE); KOHLER, Markus, 78194 Immendingen (DE)
(74) Vertreter: Witte, Weller & Partner Patentanwälte mbB
(86) Internationale Anmeldenummer: PCT/EP2013/068605
(87) Internationale Veröffentlichungsnummer: WO 2014/048707

(56) Entgegenhaltungen:
- EP-A1- 1 179 387
- EP-A1- 1 364 742
- EP-A2- 1 186 375
- WO-A2-2012/081860
- DE-A1-102004 029 045
- GB-A- 2 095 138

## Beschreibung

Die vorliegende Erfindung betrifft ein Werkzeugmagazin mit Magazinplätzen für Werkzeughalter und zumindest einem Werkzeuggreifer für einen eine Längsachse aufweisenden Werkzeughalter, der einen vorzugsweise mit einer Greifernut versehenen Bund aufweist, an dem auf einer in der Längsachse unteren Seite ein Bearbeitungswerkzeug befestigbar ist, und an dem auf einer in der Längsachse oberen Seite ein Hohlschaftkegel zum Einspannen des Werkzeughalters in eine Werkzeugaufnahme vorgesehen ist.

Ein derartiger Werkzeuggreifer ist aus der DE 10 2004 029 045 A1 bekannt.

Bei dem bekannten Werkzeuggreifer sind als Haltemittel zwei feststehende Backen vorgesehen sind, die den Werkzeughalter in Längsrichtung formschlüssig halten, wobei als weitere Haltemittel zwei schwenkbare, federbelastete Backen vorgesehen sind, die in ihrer Haltestellung an einer Außenfläche des Werkzeughalters anliegen und diesen formschlüssig halten. Wenn Werkzeugspindel und Werkzeuggreifer aufeinander zu gefahren werden, gelangt die Werkzeugspindel mit ihrer Stirnseite in Anlage mit den schwenkbaren Backen und verschwenkt diese so, dass der Werkzeughalter quer zu seiner Längsrichtung aus den feststehenden Backen herausgenommen werden kann.

Derartige Werkzeuggreifer sind auch anderweitig aus dem Stand der Technik hinreichend bekannt. Sie sind als Greiferhand an einem Werkzeugwechsler oder als Magazinplatz in einem Werkzeugmagazin ausgebildet. Die Greiferhände dienen dazu, einen Werkzeughalter, der in der Regel ein genormter Hohlschaftkegel-Werkzeughalter (HSK) ist und an seinem unteren Schaft ein Bearbeitungswerkzeug trägt, schnell zu einer Übergabeposition zu der Werkzeugspindel hin bzw. von ihr weg zu bewegen.

Die genormten Werkzeughalter weisen an ihrem oberen Ende einen hohlkegelförmigen Abschnitt auf, mit dem sie in eine entsprechende Werkzeugaufnahme an der Stirnseite einer Werkzeugspindel oder einem anderen Maschinenteil eingesetzt werden. An den hohlkegelförmigen oberen Abschnitt schließt sich ein verdickter zylinderförmiger Bund an, der mit einer umlaufenden Greifernut versehen ist, an der die Werkzeughalter von den Werkzeuggreifer ergriffen werden. Unten an den zylinderförmigen Bund schließt sich der Schaft an, in dem das Bearbeitungswerkzeug gehalten ist.

In der Werkzeugspindel ist dann ein Spannsystem vorgesehen, mit dem der Werkzeughalter über vorgeschobene und danach gespreizte Zangensegmente innen in seinem Hohlschaftkegel ergriffen und durch Zurückziehen der Zangensegmente in die Werkzeugaufnahme eingezogen sowie in dieser durch Anlage des Hohlschaftes an die Werkzeugaufnahme drehfest verspannt wird, wie es beispielsweise in der DE 10 2007 044 114 A1 beschrieben wird, auf deren Inhalt wegen weiterer Details vollinhaltlich Bezug genommen wird.

Bei dem aus der DE 10 2004 029 045 A1 bekannten Werkzeuggreifer greifen die feststehenden Backen in die Greifernut ein, während die schwenkbare Backen an der Außenfläche des Bundes angreifen.

Aus den Dokumenten EP 1 179 387 A1, EP 1 364 742 A1 und WO 2012/081860 A2 sind Werkzeugmagazine mit Werkzeuggreifern gemäß den Oberbegriff des Anspruchs 1 bekannt.

Es sind Werkzeugmaschinen bekannt, bei denen ein Werkzeugwechsler mit einer Greiferhand versehen ist, so dass zunächst ein Werkzeughalter mit einem bisher im Einsatz befindlichen Bearbeitungswerkzeug aus der Werkzeugaufnahme entnommen und in einem Leerplatz in dem Werkzeugmagazin abgelegt wird, bevor ein neuer Werkzeughalter aus dem Werkzeugmagazin entnommen und in die Werkzeugaufnahme eingesetzt wird. Bei anderen, bekannten Werkzeugmaschinen sind zwei Werkzeugwechsler vorgesehen, die im Gegentakt arbeiten, so dass die eine Greiferhand bereits einen aus dem Werkzeugmagazin entnommenen Werkzeughalter zu der Werkzeugspindel hin bewegt, während die andere Greiferhand den bisher eingespannten Werkzeughalter auf der Werkzeugaufnahme entnimmt und zum Werkzeugmagazin transportiert.

Darüber hinaus sind Werkzeugmaschinen bekannt, bei denen der Werkzeugwechsel im Pick-up-Verfahren erfolgt, bei dem die Werkzeugspindel unmittelbar eine Wechselposition an dem Werkzeugmagazin anfährt und dort zunächst den eingespannten Werkzeughalter in einem Leerplatz ablegt, woraufhin das Werkzeugmagazin dann teilt, also einen neuen Werkzeughalter an die Wechselposition fährt, wo er von der Werkzeugspindel "aufgenommen" wird.

Sowohl die insoweit beschriebenen Greiferhände als auch die Magazinplätze in dem Werkzeugmagazin werden jeweils durch die eingangs erwähnten Werkzeuggreifer gebildet, in denen die Werkzeughalter formschlüssig gehalten werden.

Dieses formschlüssige Halten der Werkzeughalter in den Werkzeuggreifern ist nicht nur für die Betriebssicherheit der bekannten Werkzeugmaschinen wichtig, sondern auch für die Geschwindigkeit, mit der ein Werkzeugwechsel erfolgen kann. Je schneller sich nämlich die Magazinplätze in einem Werkzeugmagazin verfahren lassen und/oder je schneller eine Greiferhand zwischen dem Werkzeugmagazin und der Werkzeugaufnahme an der Werkzeugspindel bewegt werden kann, umso schneller lässt sich ein im Einsatz befindliches Bearbeitungswerkzeug gegen ein neues Bearbeitungswerkzeug austauschen.

Wegen der beim Teilen des Werkzeugmagazins und/oder beim Verfahren der Greiferhand auftretenden hohen Beschleunigungen ist es unablässig, dass die Werkzeughalter in den Werkzeuggreifern sicher ergriffen werden. Ein aus einem Werkzeuggreifer herausfallender Werkzeughalter führt nicht nur zu einem Stillstand in dem Bearbeitungsprozess, er kann auch beträchtliche Schäden an der Werkzeugmaschine anrichten und im ungünstigsten Fall sogar zu Personenschäden führen.

Aber nicht nur ein Herausfallen der Werkzeughalter führt zu den erwähnten Schäden, auch ein sich nur teilweise aus dem Werkzeuggreifer herauslösender Werkzeughalter führt in der Regel dazu, dass der Bearbeitungsvorgang abgebrochen werden muss, denn der Werkzeughalter wird jetzt nicht mehr lagerichtig in die Werkzeugspindel eingesetzt oder in das Magazin abgelegt.

Daher weisen die meisten bekannten Werkzeuggreifer zwei bewegliche Backen auf, die durch Zug- oder Druckfedern in ihre Schließstellung vorgespannt sind. Die Federkraft bestimmt dabei die Kraft, mit der die Werkzeughalter in dem Werkzeuggreifer gehalten werden, denn der Formschluss ist nicht selbsthemmend, bei entsprechenden Beschleunigungen drückt der Werkzeughalter die beweglichen Backen in Richtung ihrer Spreizstellung, was nur durch die Kraft der Zug- oder Druckfedern verhindert wird. Wenn die Federn brechen oder altern, führt dies dazu, dass die Werkzeughalter nicht mehr sicher in den bekannten Werkzeuggreifern gehalten werden.

Aus der DE 37 17 201 A1 ist ein Werkzeuggreifer in Form einer Greiferhand mit zwei festen Backen bekannt, die einen Werkzeughalter an seiner Greifernut erfassen und in axialer Richtung halten. Auf den beiden festen Backen sind schwenkbar zwei bewegliche Backen angeordnet, die um zur Längsachse des Werkzeughalters parallele Achsen über ein zwangsgesteuertes Getriebe geöffnet und geschlossen werden. Das Getriebe wird über die Axialbewegung eines Betätigungsorganes angetrieben und durch eine Druckfeder in seine Schließstellung vorgespannt. In der Spreizstellung der beweglichen Backen kann der Werkzeughalter quer zu seiner Längsrichtung aus den festen Backen seitlich herausgezogen werden.

Auch bei diesem Werkzeuggreifer ist es von Nachteil, dass bei einem Nachlassen der Spannkraft der Feder die Schließkraft und damit die Haltekraft zurückgehen, bzw. bei einem Bruch der Feder völlig verloren gehen. Ferner reicht die Schließkraft häufig nicht aus, wenn das Getriebe durch in die Greiferhand gelangte Späne verklemmt ist.

Ein aus der DE 40 36 915 A1 bekannter Werkzeuggreifer vermeidet diese Nachteile bei einem Werkzeuggreifer, wie er aus der DE 37 17 201 A1 bekannt ist, dadurch, dass das Getriebe nicht über eine Druckfeder sondern über einen Kupplungsmechanismus betätigt wird, der die Greiferhand vorübergehend mit einem raumfesten Anschlag verbindet. Durch Verfahren der angekuppelten Greiferhand gegenüber dem raumfesten Anschlag wird das Getriebe betätigt, wodurch die beweglichen Backen zwischen ihrer Spreizstellung und ihrer Schließstellung verschwenkt werden.

Obwohl dieser Werkzeuggreifer die Nachteile vermeidet, die mit über Federn vorgespannten Backen verbunden sind, ist er doch konstruktiv sehr kompliziert aufgebaut, wobei wegen des Ankuppelns und der damit verbundenen Maßnahmen der Werkzeugwechsel sehr langsam vonstatten geht.

Auch die DE 195 37 071 A1 beschreibt einen Werkzeuggreifer in Form einer Greiferhand, die an einem Werkzeugwechsler angeordnet ist, der Werkzeughalter zwischen einer Werkzeugaufnahme an einer Werkzeugspindel und einem Werkzeugmagazin überführt. Dieser Werkzeuggreifer weist zwei bewegliche Backen auf, die um eine parallel zur Längsachse der Werkzeughalter verlaufende Schwenkachse zwischen einer Spreizstellung und einer Schließstellung verschwenkbar sind. Statt der oben beschriebenen beiden festen Backen ist ein Klemmstein vorgesehen, der nach einem komplizierten Werkzeugwechselverfahren den Werkzeughalter in axialer Richtung fixiert, wenn er mit seinem Hohlschaftkegel bereits in eine Werkzeugaufnahme eingesetzt ist. Die beiden beweglichen Backen werden über einen pneumatischen, hydraulischen oder elektromechanischen Antrieb verschwenkt.

Bei diesem Werkzeuggreifer ist von Nachteil, dass er zum einen konstruktiv sehr aufwendig ist und zum anderen ein hohes Gewicht aufweist, so dass er wegen der zu bewegenden schweren Masse nur einen langsamen Werkzeugwechsel ermöglicht. Ferner ist das Verfahren wegen des Zusammenwirkens von Klemmstein und Werkzeugaufnahme relativ kompliziert und muss über Sensoren überprüft werden, so dass auch hierdurch der Werkzeugwechsel langsam erfolgen kann.

Die DE 199 19 446 A1 beschreibt einen Werkzeuggreifer, der als Magazinplatz in einem Werkzeugmagazin ausgebildet ist. Bei diesem bekannten Werkzeuggreifer wird der Werkzeughalter quer zwischen zwei feste Backen eingeführt und dann in eine an den Backen vorgesehene Vertiefung abgesenkt, wo er durch sein Eigengewicht gehalten wird. Der Werkzeugwechsel erfolgt hier im Pick-up-Verfahren, die Werkzeugspindel fährt einen auszuwechselnden Werkzeughalter seitlich quer in den Werkzeuggreifer ein, der dabei mit seinen festen Backen an gegenüberliegenden Seiten in die Greifernut des Werkzeughalters eingreift. Wenn der Werkzeughalter quer vollständig eingeschoben ist, wird er abgesenkt, so dass er in der Vertiefung zu liegen kommt.

Diese Konstruktion ist zwar sehr einfach, ermöglicht jedoch kein schnelles Verfahren der Magazinplätze, da der Werkzeughalter lediglich durch sein Eigengewicht gehalten wird.

Die eingangs erwähnte DE 10 2004 029 045 A1 vermeidet viele im Stand der Technik zu findende Nachteile bei einem Werkzeuggreifer dadurch, dass die beiden schwenkbaren Backen in ihrer Haltestellung unter Federkraft an der Außenfläche des Bundes des Werkzeughalters anliegen. Zum Öffnen der schwenkbaren Backen wird die Werkzeugspindel von oben auf den Werkzeuggreifer gefahren, wobei er mit seiner Stirnseite auf die schwenkbaren Backen drückt, wodurch diese gegen die Federkraft in ihre Freigabestellung gedrückt werden.

Die Anordnung der Schwenkachsen ist dabei so getroffen, dass die schwenkbaren Backen nicht mehr in der Ebene des Formschlusses bewegt werden, sondern zum Öffnen aus der Ebene heraus und zum Schließen wieder in die Ebene hinein geschwenkt werden.

Die Haltekraft hängt hier nicht von einer Federkraft oder einem gegebenenfalls selbsthemmenden Getriebe ab, sondern nur vom erfolgten Formschluss. Die Haltekraft kann auch nicht mehr "überdrückt" werden, denn bei einem schnellen Bewegen des Werkzeuggreifers drückt der Werkzeughalter aufgrund der Fliehkraft die schwenkbaren Backen nicht um deren Schwenkachsen herum sondern belastet sie quer zur Schwenkachse, wohin die schwenkbaren Backen jedoch nicht ausweichen können.

Obwohl sich diese Konstruktion im Einsatz bewährt hat, ist sie doch mit bestimmten Nachteilen verbunden.

Die Konstruktion ist zum einen voluminös und schwer, was bei schnellen Bewegungen Probleme bereiten kann. Außerdem kann es bei ungünstigen geometrischen Verhältnissen oder bei anhaftenden Spänen doch dazu kommen, dass die schwenkbaren Backen einer Kraftkomponente ausgesetzt sind, die um die Schwenkachse wirkt, so dass schwere und schnell beschleunigte Werkzeughalten doch zu einem ungewollten Öffnen des Werkzeuggreifer führen.

Zum anderen ist der bekannte Werkzeuggreifer aufwändig in der Einstellung der Schwenkachsen, was insgesamt zu Kostennachteilen führt.

Aus der GB 2 095 138 A ist eine Werkzeugmaschine mit zwei vertikalen Werkstückspindeln und zwei Revolverköpfen bekannt, in denen mehrere Werkzeuge und jeweils ein Werkstückgreifer für Werkstücke vorgesehen sind, die einen nach oben offenen Hohlraum aufweisen. Der Werkstückgreifer weist zwei Spreizfinger auf, die in den Hohlraum eingeführt und dann über einen Kniehebel so gespreizt werden können, dass sie sich gegen die Innenwand des Hohlraumes verspannen und das Werkstück kraftschlüssig halten und transportieren können.

Vor diesem Hintergrund liegt der vorliegenden Erfindung die Aufgabe zugrunde, das eingangs erwähnte Werkzeugmagazin so weiterzubilden, dass der Werkzeuggreifer einen konstruktiv einfachen Aufbau aufweist, wobei insgesamt die Einsatzmöglichkeit erweitert und ein schneller sowie einfacher Werkzeugwechsel ermöglicht wird.

Diese Aufgabe wird erfindungsgemäß gelöst durch ein Werkzeugmagazin mit Magazinplätzen für Werkzeughalter und zumindest einem Werkzeuggreifer für einen eine Längsachse aufweisenden Werkzeughalter, der einen vorzugsweise mit einer Greifernut versehenen Bund aufweist, an dem auf einer in der Längsachse unteren Seite ein Bearbeitungswerkzeug befestigbar ist, und an dem auf einer in der Längsachse oberen Seite ein Hohlschaftkegel zum Einspannen des Werkzeughalters in eine Werkzeugaufnahme vorgesehen ist, wobei der Werkzeuggreifer Haltemittel aufweist, die einen in dem Werkzeuggreifer aufgenommenen Werkzeughalter an dessen Hohlschaftkegel erfassen, wobei die Haltemittel an zumindest zwei Backen derart angeordnet sind, dass sie bei geschlossenen Backen an dem Hohlschaftkegel eines von dem Werkzeuggreifer gehaltenen Werkzeughalters angreifen, wobei an zumindest einem der Backen zumindest ein Finger angeordnet ist, der bei geschlossenen Backen von oben in den Hohlschaftkegel eines von dem Werkzeuggreifer gehaltenen Werkzeughalters eingreift, und wobei an zumindest einem der Backen eine Formfläche, vorzugsweise eine Halbschale, vorgesehen ist, die bei geschlossenen Backen zumindest teilweise außen an dem Hohlschaftkegel eines von dem Werkzeuggreifer gehaltenen Werkzeughalters anliegt.

Die der Erfindung zugrunde liegende Aufgabe wird auf diese Weise vollkommen gelöst.

Der Werkzeuggreifer eignet sich zum Ergreifen und Transportieren von Werkzeughaltern, die anderweitig von Magazinplätzen oder Greifern an der Greifernut oder an sonstigen Abschnitten des Bundes gehalten werden. Weil der Werkzeuggreifer ausschließlich am Hohlschaftkegel angreift, bleiben die Greifernut sowie die zylindrische Umfangsfläche des Bundes frei, so dass dort die eingangs umfangreich beschriebenen Greiferhände den Werkzeughalter erfassen können.

Die Erfinder der vorliegenden Anmeldung haben erkannt, dass auf diese Weise der Werkzeuggreifer bei einfacher Konstruktion eine erweiterte Handhabbarkeit und Einsatzmöglichkeit bereitstellt, denn nun können Werkzeughalter problemlos zwischen zwei Greiferhänden überführt werden, die jeweils an der Greifernut angreifen, ohne dass an dem Werkzeuggreifer dazu ein kompliziertes und mehre Bewegungsabläufe nacheinander erforderndes Haltesystem verwendet wird, wie es vergleichbar in Werkzeugspindeln zum Einziehen und Einspannen der Werkzeughalter verwendet wird. Der Werkzeuggreifer kann dadurch einen Werkzeughalter in einem einfachen Bewegungsablauf sehr schnell ergreifen.

Der Werkzeuggreifer kann somit als Überführungsgreifer verwendet werden, der Werkzeughalter aus dem Werkzeugmagazin entnimmt und unmittelbar in einen Maschinengreifer ablegt, der dann eine Werkzeugspindel in Pick-Up-Verfahren bedient. Ferner lässt sich der Werkzeuggreifer verwenden, um Werkzeughalter zwischen einem Maschinenmagazin mit einer geringen Anzahl von Magazinplätzen und einem Hintergrundmagazin mit einer großen Anzahl von Magazinplätzen zu überführen.

Die Haltemittel sind an zumindest zwei Backen derart angeordnet, dass sie bei geschlossenen Backen an dem Hohlschaftkegel eines von den Werkzeuggreifer gehaltenen Werkzeughalters angreifen.

Diese Maßnahme ist konstruktiv von Vorteil, denn durch Öffnen der Backen, also durch ein Verschwenken oder durch eine Linearverschiebung, können die an den Backen ausgebildeten Haltemittel außen an dem Hohlschaftkegel und/oder in dessen Hohlraum in Eingriff gebracht werden, ohne dass die komplizierte Technik der spreizenden Zangensegmente eingesetzt werden muss, wie dies bei den üblichen Spannsystemen der Fall ist. Das Öffnen und Schließen der Backen ist ein Beispiel für den erfindungsgemäß bereitgestellten einen Bewegungsablauf, mit dem der Werkzeuggreifer den Werkzeughalter ergreift.

An zumindest einem der Backen ist zumindest ein Finger angeordnet, der bei geschlossenen Backen von oben in den Hohlschaftkegel eines von dem Werkzeuggreifer gehaltenen Werkzeughalters eingreift.

Bei dieser Maßnahme ist von Vorteil, dass durch den zumindest einen Finger ein formschlüssiger Halt in Längsrichtung erreicht wird, so dass auf die beiden feststehenden Backen, wie sie im Stand der Technik verwendet werden vollständig verzichtet werden kann.

An zumindest einem der Backen ist eine Formfläche, vorzugsweise eine Halbschale, vorgesehen, die bei geschlossenen Backen zumindest teilweise außen an dem Hohlschaftkegel eines von dem Werkzeuggreifer gehaltenen Werkzeughalters anliegt.

Auch diese Haltemittel verhindern in vorteilhafter Weise ein Verkippen des Werkzeughalters quer zu seiner Längsachse, wobei sie durch die Reibung an der konischen Außenfläche des Hohlschaftkegels auch ein Abrutschen in Längsrichtung der Längsachse verhindern.

Dabei ist es weiter bevorzugt, wenn an einem Backen ein Finger und an dem anderen Backen zwei Finger vorgesehen sind, die zwischen sich einen Freiraum begrenzen, in dem sich der eine Finger des einen Backens bei geschlossenen Backen erstreckt.

Hier ist von Vorteil, dass die Finger verschränkt sind, so dass die drei Finger, die von zwei gegenüberliegenden Seiten ineinandergreifen, auch ein Verkippen des Werkzeughalters in dem Werkzeuggreifer zuverlässig verhindern.

Weiter ist es bevorzugt, wenn an zumindest einem der Backen zumindest ein Orientierungszapfen angeordnet ist, der bei geschlossenen Backen in eine Mitnehmernut eingreift, die in dem Hohlschaftkegel eines von dem Werkzeuggreifer gehaltenen Werkzeughalters vorgesehen ist.

Bei dieser Maßnahme ist von Vorteil, dass durch die Ausnutzung der Mitnehmernuten nicht nur ein Verdrehen des Werkzeughalters in dem Werkzeuggreifer verhindert wird, ferner wird auch für eine lagerichtige Übergabe des Werkzeughalters in den neuen Werkzeuggreifer und von dem Werkzeuggreifer beispielsweise an einen Maschinengreifer oder ein Maschinenmagazin gesorgt. In einem HSK-Werkzeughalter sind nämlich in der Regel zwei Mitnehmernuten vorgesehen, die sich bezüglich Tiefe und Breite unterscheiden, so dass durch entsprechende geometrische Anordnung der Orientierungszapfen dafür gesorgt wird, dass ein Werkzeughalter nur in der richtigen winkelmäßigen Ausrichtung um seine Längsachse herum in den Werkzeuggreifer eingesetzt werden kann.

Die Finger, die Formmittel sowie die Orientierungszapfen stellen somit Haltemittel dar, die allein oder in beliebiger Kombination an dem Hohlschaftkegel angreifen und einen in dem Werkzeuggreifer aufgenommene Werkzeughalter bei geschlossenen Backen halten.

Im Gegensatz zu den im Stand der Technik bei Greiferhänden verwendeten Backen sind die bei dem Werkzeuggreifer vorgesehen Backen nicht dazu ausgelegt, selbst unmittelbar an dem Bund oder der Greifernut anzugreifen, sie tragen vielmehr die drei oben beschriebenen Haltemittel in beliebiger Kombination und sorgen dafür, dass die Haltemittel bei geschlossenen Backen in der beschriebenen Weise in Eingriff ausschließlich mit dem Hohlschaftkegel sind.

Allgemein ist es dabei bevorzugt, wenn zwei Backen vorgesehen sind, die derart angeordnet sind, dass sie beim Öffnen und Schließen den Bewegungsablauf ausführen, bei dem die Backen ihren Abstand zueinander und ihre Lage parallel zu der Längsachse eines aufgenommenen Werkzeughalters verändern.

Hier ist von Vorteil, dass durch den Bewegungsablauf den Backen beim Schließen und Öffnen zwei Bewegungskomponenten auferlegt werden, eine unter Veränderung des Abstandes aufeinander zu und eine weitere von oben auf den Hohlschaftkegel zu. Die Bewegungskomponente von oben ist für den Eingriff der Finger in den Hohlraum des Hohlschaftkegels vorgesehen, so dass weder der Werkzeughalter noch der Werkzeuggreifer selbst eine Bewegung in Richtung der Längsachse des Werkzeughalters vollführen muss. Diese vertikale Bewegungskomponente wird also durch die Backen selbst bereitgestellt. Auch dies führt zu einer einfachen Konstruktion des Werkzeughalters.

Besonders bevorzugt ist es dabei, wenn für die vorzugsweise verschiebbar zwischen zwei Wangen geführten Backen Führungen vorgesehen sind, die beim Verschieben der Backen den Bewegungsablauf der Backen bewirken, die dabei ihren Abstand zueinander und ihre Lage parallel zu der Längsachse eines aufgenommenen Werkzeughalters verändern.

Hier ist von Vorteil, dass durch die Form der Führungen den Backen beim Verschieben die beiden Bewegungskomponenten auferlegt werden. Die Führungen sind ein bevorzugtes Beispiel dafür, wie der eine Bewegungsablauf zum Ergreifen des Werkzeughalters konstruktiv realisiert werden kann, indem nämlich zwei Bewegungskomponenten entweder zeitgleich oder in zwei aufeinanderfolgenden Abschnitten während der Bewegung der Backen erzeugt werden. Dies ermöglicht ein besonders einfach zu steuerndes und schnelles Ergreifen bzw. Freigeben eines Werkzeughalters. Weiter ist konstruktiv von Vorteil, dass für das Verschieben eine einfache Führung vorgesehen werden kann, und dass die Backen nicht gelenkig miteinander verbunden sind, wie dies im Stand der Technik vielfach der Fall ist. Durch den vollständigen Verzicht auf Schwenkbewegungen ist der Aufbau des Werkzeuggreifers sehr einfach und preiswert, wobei er auch nur einen geringen Platzbedarf ausweist

Die Bewegungskomponente von oben auf den Werkzeughalter zu kann auch dazu genutzt werden, um bei einer den Werkzeughalter beispielsweise im Magazinplatz oder an einem Maschinengreifer haltenden Greiferhand schwenkbare Backen zu betätigen. Eine solche Greiferhand ist in der nicht vorveröffentlichen DE 10 2012 102 571 beschrieben, auf deren Offenbarung hiermit vollinhaltlich Bezug genommen wird. Gleichfalls kann diese Bewegungskomponente dazu verwendet werden, den aus der DE 10 2004 029 045 A1 bekannten Greifer zu öffnen.

Die beiden Bewegungskomponenten können beispielsweise über gebogene Führungen realisiert werden, die nacheinander, also in verschiedenen Abschnitten der Führungsbahn, oder überlagert die beiden Bewegungskomponenten optimal steuern.

Ein besonders wichtiger Vorteil der von oben kommenden Bewegungskomponente ist darin zu sehen, dass Werkzeughalter jetzt von der Seite zwischen die offenen Backen gefahren werden können, der Werkzeuggreifer muss dazu nicht hochgefahren bzw. der Werkzeughalter oder die ihn tragende Greiferhand muss nicht heruntergefahren werden.

Mit dem Werkzeuggreifer ist also das Erfassen und der Transport von Werkzeughaltern möglich, indem der Werkzeuggreifer selbst lediglich in einer Ebene hin- und hergefahren wird. Bei geöffneten Backen kann dann seitlich ein Werkzeughalter zwischen die Backen gefahren werden, der dann beim Schließen der Backen durch die in seiner obere Öffnung eintauchenden Finger und ggf. die sich außen anlegenden Formflächen formschlüssig gehalten wird.

Wenn die Greiferhand in den Magazinplätzen von der eingangs beschriebenen, bekannten Art ist, wird durch dieses Erfassen des Werkzeughalters mit dem Werkzeuggreifer gleichzeitig ermöglicht, dass der Werkzeughalter jetzt seitlich aus der Greiferhand an dem Magazinplatz oder dem Maschinengreifer ausgefahren werden kann. In gleicher Weise kann durch die Linearbewegung des Werkzeuggreifers der Werkzeughalter in eine weitere Greiferhand entsprechend bekannter Bauart eingeschoben werden, wobei durch das Öffnen der Backen des neuen Werkzeuggreifers dann die schwenkbaren Backen der aufnehmenden Greiferhand den Werkzeughalter an der Greifernut und dem Bund erfassen.

Dies ermöglicht einen schnellen und einfach zu steuernden Werkzeugwechsel, wobei durch die verschiedenen Haltemittel der Werkzeughalter in dem Werkzeuggreifer sehr verliersicher gehalten ist, so dass er weder herausfallen noch sich um seine Längsachse verdrehen kann, er behält also auch seine ursprüngliche Orientierung bei, so dass er lagerichtig zwischen einem Magazinplatz und einem Maschinenmagazin oder Maschinengreifer übergeben werden kann.

Dabei ist es bevorzugt, wenn der oder jeder Finger eine Längsrichtung aufweist, die schräg, vorzugsweise unter einem Winkel zwischen 40° und 50°, zu der Längsachse eines von dem Werkzeuggreifer gehaltenen Werkzeughalters auf diesen zu verläuft.

Auch diese Maßnahme ist konstruktiv von Vorteil, sie stellt sicher, dass die Finger automatisch in den Hohlraum des Hohlschaftkegels hineingelangen, wenn die Backen schließen und dabei ihre beiden Bewegungskomponenten ausführen.

In diesem Zusammenhang ist es besonders bevorzugt, wenn die Führungen lineare Führungen sind, die schräg, vorzugsweise unter einem Winkel zwischen 40° und 50°, zu der Längsachse eines von dem Werkzeuggreifer gehaltenen Werkzeughalters auf diesen zu verlaufen.

Auch diese Maßnahme ist konstruktiv von Vorteil, nach Erkenntnis der Erfinder der vorliegenden Anmeldung reicht es in allen bisher getesteten Anwendungsfällen aus, wenn die beiden Bewegungskomponenten über die schräg verlaufenden linearen Führungen überlagert und sozusagen sukzessive gleichzeitig erzeugt werden.

Allgemein ist es dabei bevorzugt, wenn zumindest einem der beiden Backen zumindest eine Verstellvorrichtung zugeordnet ist, über die die beiden Backen in ihrem Abstand zueinander verstellbar sind, wobei weiter vorzugsweise die Verstellvorrichtung eine Stange umfasst, die an ihrem einen Ende in ihrer Längsrichtung verschiebbar an einem der Backen gelagert ist und an ihrem anderen Ende fest mit dem anderen Backen verbunden ist.

Diese Maßnahmen sind konstruktiv von Vorteil, eine Einwirkung der Verstellvorrichtung auf eine der beiden Backen ist ausreichend, um die Bewegung der anderen Backe über die Führungen zwangsgekoppelt zu bewirken. Lediglich eine Abstandsänderung sorgt nämlich sowohl in den schrägen als auch in den gebogenen Führungen dafür, dass sich beide Backen gleichzeitig aufeinander zu bzw. voneinander weg und in Richtung der Längsachse des Werkzeughalters auf diesen zu bzw. von diesem weg bewegen. Die zumindest eine Stange stellt dabei eine Art Zwangskopplung in der Bewegung der beiden Backen sicher.

Weiter ist es bevorzugt, wenn die Verstellvorrichtung einen Antrieb aufweist, der an einem der beiden Backen angeordnet ist.

Mit diese Maßnahme sind gleich mehrere Vorteile verbunden, zum einen wird kein externer Antrieb verwendet, sondern der Antrieb fährt sozusagen mit dem einen Backen mit, es ist nur die Energie für den Antrieb zu übertragen. Hier können Strom, Hydrauliköl oder Pneumatikgas über flexible Leitungen übertragen werden.

Besonders vorteilhaft ist dabei, dass der "mitfahrende Antrieb" unmittelbar auf die Stange wirken kann, so dass ein Linearantrieb beliebiger Art gebildet wird. Die Stange kann beispielsweise eine Gewindestange sein, die gedreht wird, oder die über eine angetriebene Mutter nach Art eines Spindeltriebes verstellt wird.

Besonders bevorzugt ist es dabei, wenn der Antrieb einen vorzugsweise doppelt wirkenden Tauchkolbenzylinder umfasst, und wenn die Stange als Kolbenstange ausgebildet und mit ihrem einen Ende in dem Tauchkolbenzylinder geführt ist.

Diese Maßnahme ist konstruktiv von Vorteil, sie sorgt nämlich für einen sehr einfachen und zuverlässigen Antrieb. Die Stange wird dabei aktiv ein- und ausgefahren, wobei der Tauchkolbenzylinder über Pneumatikgas oder Hydrauliköl betrieben wird. Diese Art des Antriebes ermöglicht ein sehr schnelles Öffnen und Schließen, weil die beiden Backen durch den Antrieb lediglich zwischen ihren beiden Endstellungen verstellt werden müssen. Ferner sorgt diese Art des Antriebes für ein sehr sicheres Halten eines in den Werkzeuggreifer eingeklemmten Werkzeughalters, weil vollständig auf Federn verzichtet werden kann.

Der Werkzeuggreifer wird dazu verwendet, um an dem Werkzeugmagazin, in dem Magazinplätze mit den eingangs erwähnten Greiferhänden versehen sind, Werkzeughalter zu entnehmen bzw. einzulegen. Der Werkzeuggreifer kann dabei sowohl zum Bestücken des Werkzeugmagazins als auch zum Überführen der Werkzeughalter zu einem Maschinengreifer oder einem Maschinenmagazin verwendet werden.

Der Werkzeuggreifer ist vorzugsweise an einer Tragstruktur montiert, die zwischen einer Magazinposition, in der ein Werkzeughalter zwischen dem Werkzeuggreifer und einem Magazinplatz übergebbar ist, und einer Bestückungsposition hin- und herbewegbar ist, die der Bestückung der Magazinplätze mit Werkzeughaltern dient.

Dies ermöglicht ein manuelles oder automatisiertes Ein- und Ausschleusen von Werkzeughaltern zum Bestücken und Umrüsten des Werkzeugmagazins.

Weiter vorzugsweise ist der Werkzeuggreifer an einer Tragstruktur montiert, die zwischen einer Magazinposition, in der ein Werkzeughalter zwischen dem Werkzeuggreifer und einem Magazinplatz übergebbar ist, und einer Wechselposition hin- und herbewegbar ist, in der ein Werkzeughalter zwischen dem Werkzeuggreifer und einem Maschinengreifer oder Maschinenmagazin übergebbar ist.

Auf diese Weise kann das mit dem Werkzeuggreifer ausgestattete Werkzeugmagazin sowohl als Maschinenmagazin als auch als Hintergrundmagazin verwendet werden.

Vor diesem Hintergrund betrifft die vorliegende Erfindung ferner eine Werkzeugmaschine mit einer Werkzeugaufnahme zum Einspannen von Bearbeitungswerkzeugen für die Bearbeitung von Werkstücken, mit einem Maschinengreifer oder Maschinenmagazin, und mit dem neuen Werkzeugmagazin, das mit dem Werkzeuggreifer ausgestattet ist.

Weitere Vorteile ergeben sich aus der Beschreibung und der beigefügten Zeichnung.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Seitenansicht einer Werkzeugmaschine mit Maschinengreifer und neuem Werkzeugmagazin, in der ein Werkzeuggreifer verwendet wird;
- Fig. 2: eine schematische Seitenansicht eines Werkzeughalters, der in dem Werkzeuggreifer gehalten werden kann;
- Fig. 3: eine schematische Draufsicht auf eine Werkzeugmaschine mit Maschinenmagazin und Hintergrundmagazin, in der der Werkzeuggreifer verwendet wird;
- Fig. 4: eine schematische Seitenansicht des Werkzeughalters in geöffneter Stellung und ohne vordere Wange, mit schematisch dargestelltem Werkzeughalter gemäß Fig. 2;
- Fig. 5: eine perspektivische Ansicht von oben auf ein Ausführungsbeispiel für den Werkzeughalter aus Fig. 4, jedoch ohne seitliche Wangen und ohne Werkzeughalter;
- Fig. 6: eine perspektivische Ansicht des Werkzeughalters aus Fig. 5 von unten;
- Fig. 7: eine perspektivische Ansicht für ein Ausführungsbeispiel der Wange des Werkzeughalters aus Fig. 4;
- Fig. 8: eine Draufsicht auf den Werkzeughalter aus Fig. 5, jedoch mit beiden Wangen;
- Fig. 9: eine Schnittdarstellung des Werkzeughalters aus Fig. 5 in Seitenansicht, gesehen längs der Linie IX-IX aus Fig. 8, mit geschlossenen Backen und eingespanntem Werkzeughalter; und
- Fig. 10: eine Darstellung wie Fig. 8, jedoch mit geschlossenen Backen und geschnitten, gesehen längs der Linie x-x aus Fig. 9.

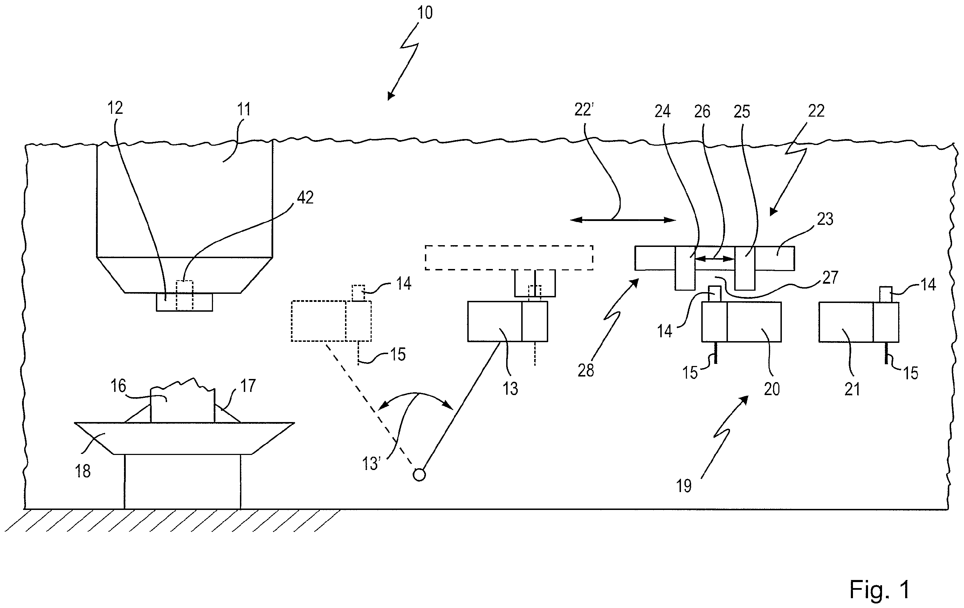

In Fig. 1 ist in schematischer Seitenansicht eine Werkzeugmaschine 10 gezeigt, die einen Spindelkopf 11 aufweist, in dem drehbar eine Werkzeugspindel 12 vorgesehen ist.

Neben dem Spindelkopf ist ein Maschinengreifer 13 angeordnet, über den Werkzeughalter 14, die mit Bearbeitungswerkzeugen 15 bestückt sind, zum Einspannen in die Werkzeugspindel 12 gehalten und zugeführt werden.

Das Bearbeitungswerkzeug 15 dient dazu, ein Werkstück 16 zu bearbeiten, das über Spannvorrichtungen 17 auf einem Werkstücktisch 18 aufgespannt ist.

Schematisch neben dem Maschinengreifer 13 ist ein Werkzeugmagazin 19 vorgesehen, das sich senkrecht zur Zeichenebene der Fig. 1 erstreckt, so dass nur zwei seiner mehreren Magazinplätze 20, 21 in Fig. 1 zu sehen sind, in denen jeweils ein Werkzeughalter 14 mit Bearbeitungswerkzeug 15 gespeichert ist. Über den Maschinengreifer 13 werden Werkzeughalter 14 zwischen dem Werkzeugmagazin 19 und der Werkzeugspindel 12 ausgewechselt.

Aus konstruktiven Gründen kann der Maschinengreifer 13 die Werkzeughalter 14 nicht unmittelbar aus den Magazinplätzen 20, 21 entnehmen, so dass erfindungsgemäß ein Werkzeuggreifer 22 vorgesehen ist, der zwei an einer Tragstruktur 23 gelagerte Backen 24, 25 umfasst.

Die Backen 24, 25 sind längs der Tragstruktur 23 derart verschiebbar, dass sich ihr Abstand 26 verändern lässt. Sind die Backen 24, 25 auseinander gefahren, bildet sich ein Freiraum 27, in den seitlich ein Werkzeughalter 14 hineingefahren kann, indem ein Magazinplatz 20, 21 senkrecht zu der Zeicheneben der Fig. 1 unter den Werkzeuggreifer 22 gefahren wird.

Durch Schließen der Backen 24, 25 wird der Werkzeughalter 14 in noch zu beschreibender Weise in einem Bewegungsablauf lediglich an seiner Oberseite erfasst und kann dann seitlich aus dem Magazinplatz 20 herausgefahren und zu dem Maschinengreifer 13 transportiert werden, in den er seitlich eingesetzt wird.

Dazu wird der Werkzeuggreifer 22, der hier als Überführungsgreifer wirkt, aus seiner in Fig. 1 durchgezogen gezeigten Magazinposition 28 über nicht dargestellte Führungen in seine gestrichelt dargestellte Wechselposition 29 verfahren. Dazu ist eine lineare Verfahrbewegung des Werkzeuggreifers 22 erforderlich, was durch einen Pfeil 22' angedeutet ist.

Nachdem der Werkzeughalter 14 so in den Maschinengreifer 13 überführt wurde, wird dieser aus seiner durchgezogen gezeigten Wechselposition in eine gestrichelt dargestellte Spindelposition gefahren, was hier lediglich beispielhaft durch einen Schwenk längs des Pfeils 13' erfolgt.

Dann wird der Spindelkopf 11 so in die Spindelposition verfahren, dass er den Werkzeughalter 14 einspannen und aus dem Maschinengreifer 13 entnehmen kann. Diese Art des Werkzeugwechsels ist bekannt und wird als Pick-up-Verfahren bezeichnet.

Nach der Bearbeitung des Werkstückes 16 mit dem Werkzeug 15 wird der Werkzeughalter 14 von dem Spindelkopf wieder in dem Maschinengreifer 13 abgelegt, der in seine Wechselposition zurückschwenkt und das gebrauchte Werkzeug 15 an den Werkzeuggreifer 22 übergibt, der wieder in seine Magazinposition 28 fährt und den Werkzeughalter 14 wieder in einem freien Magazinplatz 20, 21 ablegt und danach ein neues Werkzeug 15 in der beschriebenen Weise an den Maschinengreifer 13 übergibt.

Um den Werkzeugwechsel zu beschleunigen kann der Maschinengreifer 13 in an sich ebenfalls bekannter Weise als Doppelgreifer ausgebildet sein, der zwei Speicherplätze aufweist, einen für ein verwendetes und einen für ein neu zu verwendendes Werkzeug 15. In der Spindelposition kann dann nach dem Ablegen des verwendeten gleich ein neues Werkzeug 15 in die Werkzeugspindel 12 eingespannt werden.

Während mit dem neuen Werkzeug 15 dann das Werkstück 16 weiter bearbeitet wird, übergibt der Maschinengreifer 13 in der oben beschriebenen Weise das bisher verwendete Werkzeug 15 an den Werkzeuggreifer 22, der es gegen ein neues Werkzeug 15 aus dem Werkzeugmagazin 19 austauscht.

Der Maschinengreifer 13 schwenkt dann mit dem neuen Werkzeug 15 wieder in die Spindelposition, in der er einen freien Speicherplatz für das im Einsatz befindliche Werkzeug 15 und das neue Werkzeug 15 bereithält, bis die Bearbeitung mit dem im Einsatz befindlichen Werkzeug 15 beendet ist und es gegen das neue Werkzeug 15 ausgetauscht wird.

Alternativ können auch zwei Maschinengreifer vorgesehen sein, die im Gegentaktbetrieb arbeiten.

Lediglich der Vollständigkeit halber sei erwähnt, dass in Fig. 1 eine sog. Fahrständermaschine gezeigt ist, bei der der Spindelkopf 11 in drei Koordinatenrichtungen relativ zu dem Werkstücktisch 18 verfahren wird. Alternativ ist es auch möglich, zumindest eine oder auch zwei der Bewegungen in den Koordinatenrichtungen , die sogenannten Fahrachsen, durch Bewegung des Werkstücktisches 18 gegenüber dem Spindelkopf 11 zu realisieren.

Ferner ist es nicht erforderlich, dass die Werkzeugspindel 12 vertikal ausgerichtet ist, wie es in Fig. 1 gezeigt ist, sie kann auch horizontal, also liegend ausgebildet sein.

Darüber hinaus kann der Spindelkopf 11 auch als Mehrspindelkopf ausgelegt sein, in dem nicht nur eine Werkzeugspindel 12, sondern zwei oder vier Werkzeugspindeln angeordnet sind, die zeitgleich miteinander relativ gegenüber dem Werkstücktisch 18 verfahren werden, auf dem auch mehrere Werkstücke 16 aufgespannt sein können, die zeitgleich oder zeitlich versetzt bearbeitet werden.

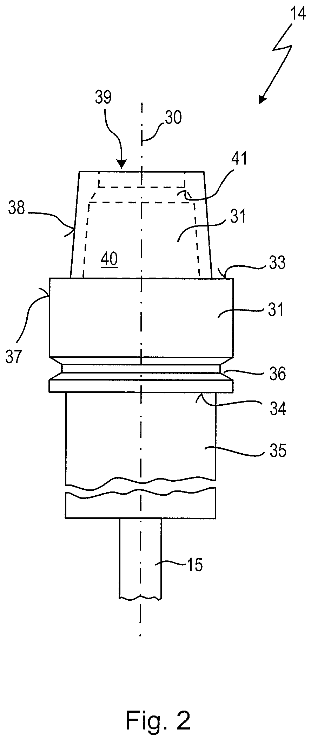

In Fig. 2 ist schematisch ein Werkzeughalter 14 gezeigt, wie er in der Werkzeugmaschine 10 aus Fig. 1 verwendet wird.

Der Werkzeughalter 14 ist in dem gezeigten Ausführungsbeispiel ein genormter HSK-Werkzeughalter, es können aber auch andere Werkzeughalter 14 verwendet werden, sofern sie die nahstehenden Merkmale aufweisen.

Der Werkzeughalter 14 weist eine symmetrisch liegende Längsachse 30 auf, die ebenfalls die Längsachse des Bearbeitungswerkzeuges 15 darstellt.

An seinem in Fig. 2 oberen Ende weist der Werkzeughalter 14 einen Hohlschaftkegel 31 auf, wie er üblicherweise zum Einspannen des Werkzeughalters 14 in die Werkzeugspindel 12 verwendet wird.

Unterhalb des Hohlschaftkegels 31 weist der Werkzeughalter 14 einen verdickten Bund 32 auf, an dessen oberer Seite 33 der Hohlschaftkegel 31 angeordnet ist.

Auf seiner der oberen Seite 33 gegenüberliegenden unteren Seite 34 ist der Werkzeughalter 14 mit einem Schaft 35 versehen, in den in an sich bekannter Weise Bearbeitungswerkzeuge 15 eingespannt werden.

Zwischen der oberen Seite 33 und der unteren Seite 34 ist an dem Bund 32 eine umlaufende Greifernut 36 vorgesehen, die gegenüber einer zylindrischen Umfangsfläche 37 des Bundes 32 nach innen zurückgesetzt ist.

Der Hohlschaftkegel 31 weist eine kegelförmige Außenfläche 38 auf, die eine in Fig. 2 nach oben offene Öffnung 39 begrenzt, die zentrisch zu der Längsachse 30 liegt. Die Öffnung 39 führt in einen inneren Hohlraum 40, in dem eine um die Längsachse 30 umlaufende, in Fig. 2 nach unten weisende Schulter 41 vorgesehen ist.

Über den Hohlschaftkegel 31 wird der Werkzeughalter in eine in Fig. 1 mit 42 bezeichnete und schematisch angedeutete Werkzeugaufnahme eingespannt, die als Innenkegel ausgebildet ist, an den sich die kegelförmige Außenfläche 38 anlegt.

Zum Einspannen der Werkzeughalters 14 in die Werkzeugaufnahme 42 dient ein in den Figuren nicht gezeigtes, in der Werkzeugspindel 12 vorgesehenes Spannsystem, das einen von einer Zugstange bewegten Spanndorn aufweist, um den herum verteilt Zangensegmente angeordnet sind.

Der Spanndorn und die Zangensegmente werden zunächst durch die Öffnung 39 in den Hohlraum 40 eingeführt und der Spanndorn dann wieder zurückgezogen. Dadurch werden die Zangensegmente nach außen gedrückt und gelangen in Anlage mit der Schulter 41, wodurch beim weiteren Zurückziehen des Spanndorns der Werkzeughalter 14 in die Werkzeugaufnahme 42 hineingezogen und dort verspannt wird, wie dies ausführlicher beispielsweise in der DE 10 2007 044 114 A1 beschrieben wird, auf deren Inhalt wegen weiterer Details vollinhaltlich Bezug genommen wird.

In den Magazinplätzen 21, 21 des Werkzeugmagazins 19 und in dem Maschinengreifer 13 werden die Werkzeughalter in an sich bekannter Weise über Greiferhände der eingangs beschriebenen Bauweise gehalten, die seitlich an der Greifernut 36 und ggf. an der zylindrischen Umfangsfläche 37 angreifen, so dass der Hohlschaftkegel 31 frei bleibt und beispielsweise über das oben beschriebene Pick-up Verfahren in eine Werkzeugaufnahme 42 an einer Werkzeugspindel 12 oder einem sonstigen Maschinenteil eingespannt werden kann.

Der Werkzeuggreifer 22 erfasst in noch zu beschreibender Weise den Werkzeughalter 14 derart an dem Hohlschaftkegel 31, dass er seitlich in die Magazinplätze 24, 25 und den Maschinengreifer 13 hinein und aus ihnen heraus gefahren werden kann.

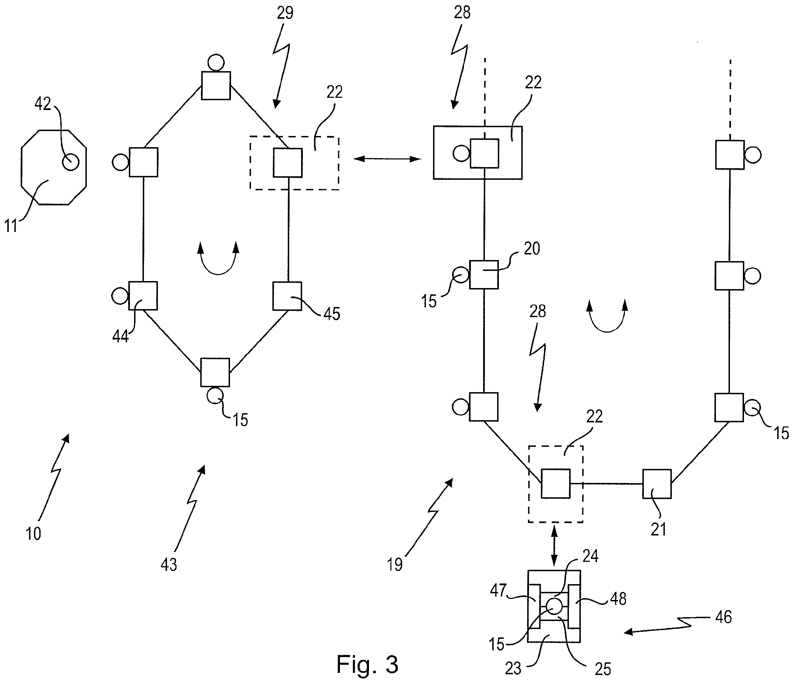

In Fig. 3 ist die Werkzeugmaschine 10 aus Fig.1 in einer schematischen Draufsicht gezeigt, wobei jetzt zwischen dem Spindelkopf 11 und dem Werkzeugmagazin 19 kein Maschinengreifer 13 sondern ein Maschinenmagazin 43 angeordnet ist, das selbst mehrere Magazinplätze 44, 45 aufweist. Das Werkzeugmagazin 19 dient hier als Hintergrundmagazin, in dem eine deutlich größere Anzahl an Magazinplätzen 20, 21 vorgesehen ist, als in dem Maschinenmagazin 43.

Dieses Prinzip mit Maschinenmagazin 43 und Hintergrundmagazin 19 dient dem schnellen Werkzeugwechsel trotz hoher Anzahl von verfügbaren Werkzeugen 15. Es ist beispielsweise in der nicht vorveröffentlichten DE 10 2011 113 311 beschrieben, auf deren Offenbarung hiermit vollinhaltlich Bezug genommen wird.

Das Werkzeugmagazin 19 kann dabei beliebig ausgebildet sein, beispielsweise als Ketten oder Scheibenmagazin. Besonders bevorzugt ist es jedoch, wenn es so ausgebildet ist, wie es in den nicht vorveröffentlichten DE 10 2011 113 312 sowie DE 10 2012 102 562 beschrieben ist, auf deren Offenbarung hiermit vollinhaltlich Bezug genommen wird.

Die Magazinplätze 20, 21 können dabei mit Greiferhänden ausgestattet sein, wie sie in der nicht vorveröffentlichten DE 10 2012 102 571 beschrieben sind, auf deren Offenbarung hiermit vollinhaltlich Bezug genommen wird.

Der neue Werkzeuggreifer 22 wird jetzt zum einen dazu verwendet, um Werkzeughalter 15 zwischen den Magazinplätzen 20 und 21 des Werkzeugmagazins 19 und Magazinplätzen 44, 45 des Maschinenmagazins 43 zu überführen. In Fig. 3 oben ist gezeigt, dass der neue Werkzeuggreifer 22 dabei zwischen seiner Magazinposition 28 und seiner Wechselposition 29 hin- und hergefahren wird.

Wenn sich der Werkzeuggreifer 22 in seiner Magazinposition 28 befindet, fahren die Magazinplätze 20, 21 unter dem Werkzeuggreifer 22 durch, was bei bestückten Magazinplätzen 20, 21 dann möglich ist, wenn die Backen 24, 25 geöffnet sind, wie dies in Fig. 1 gezeigt ist. Einen zwischen den Backen 24, 25 liegenden Werkzeughalter 15 ergreift der Werkzeuggreifer 22 dann an dessen Hohlschaftkegel 31, woraufhin er ihn seitlich aus dem Magazinplatz 20, 21 herausziehen und ebenfalls seitlich in einen Magazinplatz 44, 45 hineinschieben kann.

Die Konstruktion ist dabei so getroffen, dass der Werkzeuggreifer 22 sowohl mit aufgenommenem Werkzeughalter 15 als auch in leerem Zustand nur über nicht bestückte Magazinplätze 20, 21, 44, 45 gefahren werden kann, weil sonst eine Kollision mit an den Backen vorgesehenen Haltemitteln droht.

Der Werkzeuggreifer 22 kann ferner dazu verwendet werden, das Maschinenmagazin 19 mit Werkzeughaltern 15 zu bestücken bzw. das Werkzeugmagazin 19 umzurüsten.

In Fig. 3 unten rechts ist ein Werkzeuggreifer 22 in seiner Bestückungsposition 46 gezeigt, in der ein zwischen den Backen 24 und 25 eingeklemmter Werkzeughalter 15 zu dem leeren Magazinplatz 22 transportiert werden kann.

In der Draufsicht auf den Werkzeuggreifer 22 gemäß Fig. 3 unten rechts ist noch zu erkennen, dass er an seiner Tragstruktur 23 zwei Wangen 47 und 48 aufweist, zwischen denen die Backen 24, 25 in noch zu beschreibender Weise verschiebbar gelagert sind.

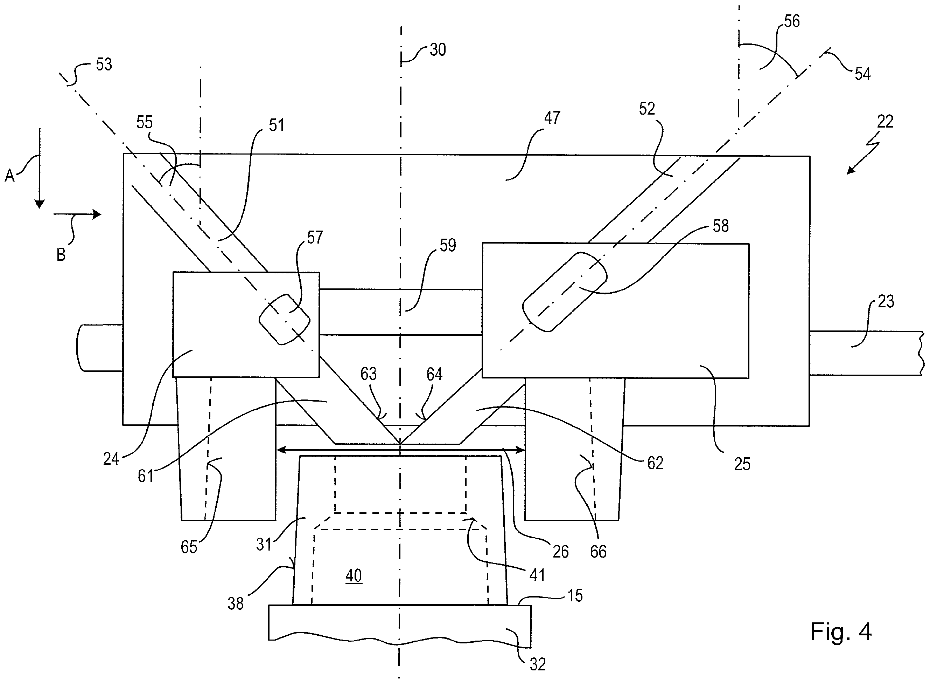

In Fig. 4 ist der Werkzeuggreifer 22 in schematischer Seitenansicht gezeigt, wobei die Wange 48 nicht dargestellt ist.

In der hinteren Wange 47 verlaufen zwei lineare Führungen 51, 52, deren Längsachsen 53, 54 mit der Längsachse 30 des zwischen den Backen 24 und 25 positionierten Werkzeughalters 15 einen Winkel 55 bzw. 56 einschließen, der zwischen 40° und 50° liegt.

In der Ebene der Zeichnung der Fig. 4 oben befinden sich auf den Backen 24 und 25 Führungsklötze 57 bzw. 58, die in den Führungen 51, 52 der oberen, in Fig. 4 nicht dargestellten Wange 48 verlaufen. Zwischen den Backen 24, 25 ist eine Stange 59 dargestellt, die fest mit dem Backen 24 verbunden ist und längsverschieblich in dem Backen 25 gelagert ist.

Durch die Stange 59 ergibt sich eine Art Zwangskopplung, so dass bei einer Änderung des Abstandes 26 zwischen den Backen 24 und 25 diese sich auch längs der Führungen 51, 52 verschieben. Mit anderen Worten, die Backen 24, 25 erfahren dabei eine mit A bezeichnete Bewegungskomponente in Richtung der Längsachse 30 und eine mit B bezeichnete Bewegungskomponente quer zu der Längsachse 30.

Auf den Hohlschaftkegel 31 des Werkzeughalters 15 zuweisend ist an dem Backen 24 ein Finger 61 und an dem Backen 25 ein Finger 62 angeordnet. Beim Zusammenschieben der Backen 24 und 25 dringen die Finger 61, 62 aufgrund ihrer Bewegungskomponente A in den Hohlraum 40 des Hohlschaftkegels 31 ein und kommen dabei mit ihren Schrägflächen 63 bzw. 64 in Anlage mit der umlaufenden Schulter 41, so dass sie den Werkzeughalter 15 derart formschlüssig halten, dass er in Richtung seiner Längsachse 30 nicht mehr in Fig. 4 nach unten bewegt werden kann.

Bei diesem Bewegungsablauf zum Schließen der Backen 24, 25 legen sich an den Backen 24, 25 unten vorgesehene Formflächen 65, 66, die hier als zu dem Hohlschaftkegel offene Halbschalen ausgebildet sind, infolge der Bewegungskomponente B gleichzeitig teilweise an die kegelförmige Außenfläche 38 des Hohlschaftkegels 31 an, wodurch der Werkzeughalter 15 gegen Verkippen gesichert wird.

Es sei noch erwähnt, dass die Finger 61, 62 dieselbe Längsrichtung 53, 54 aufweisen wie die linearen Führungen 51 und 52, so dass auch die Finger 61, 62 mit der Längsachse 30 die Winkel 55 bzw. 56 einschließen.

In Fig. 4 ist ferner noch zu erkennen, dass die Wange 47 an der nur ausschnittsweise gezeigten Tragstruktur 23 befestigt ist.

In der in Fig. 4 gezeigten, geöffneten Stellung der Backen 24, 25 kann somit ein Werkzeughalter 15 senkrecht zur Ebene der Zeichnung der Fig. 4 durch den Werkzeuggreifer 22, also zwischen den Backen 24, 25 bzw. den Formelementen 65, 66 hindurchbewegt werden.

Wenn die Backen 24, 25 aufeinander zugefahren werden, bewegen sich die Finger 61, 62 in den Hohlraum 40 hinein und ergreifen den Hohlschaftkegel 31 zusammen mit den in diesem einzigen Bewegungsablauf außen an dem Hohlschaftkegel 31 angreifenden Formelementen 65 und 66 derart formschlüssig, dass der Werkzeughalter 15 fest und unverrückbar gehalten wird.

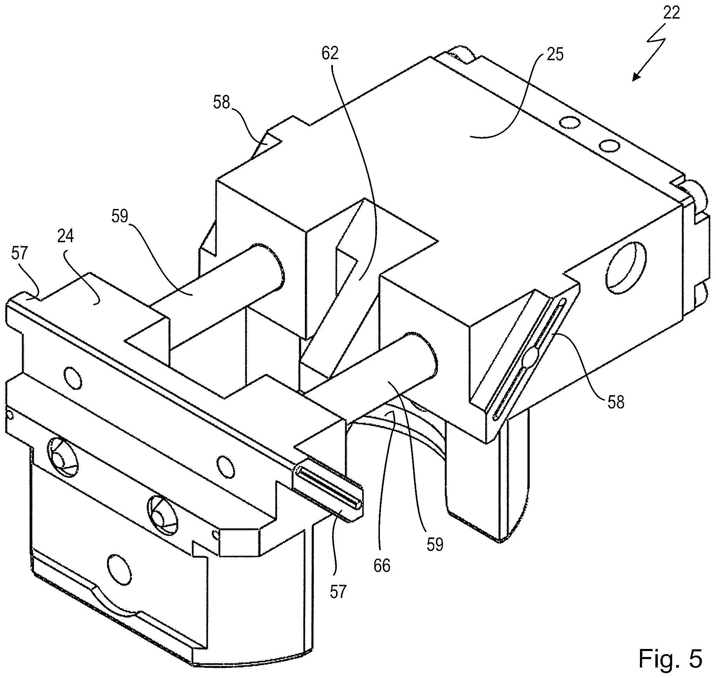

In Fig. 5 ist der Werkzeuggreifer 22 in einem konkreten Ausführungsbeispiel gezeigt, wobei aus Gründen der Übersichtlichkeit auf die Darstellung der Wangen 47 und 48 verzichtet wurde.

In der Darstellung der Fig. 5 sind die beiden Backen 24, 25 gezeigt, die über zwei Stangen 59 miteinander verbunden sind, die jeweils verschiebbar in dem Backen 25 gelagert sind.

Beidseits der Backen 24, 25 sind die Führungsklötze 57, 58 zu erkennen, wobei auch das Formteil 66 des Backens 25 erkennbar ist.

Schließlich ist der an dem Backen 25 vorgesehene Finger 62 von oben zu erkennen.

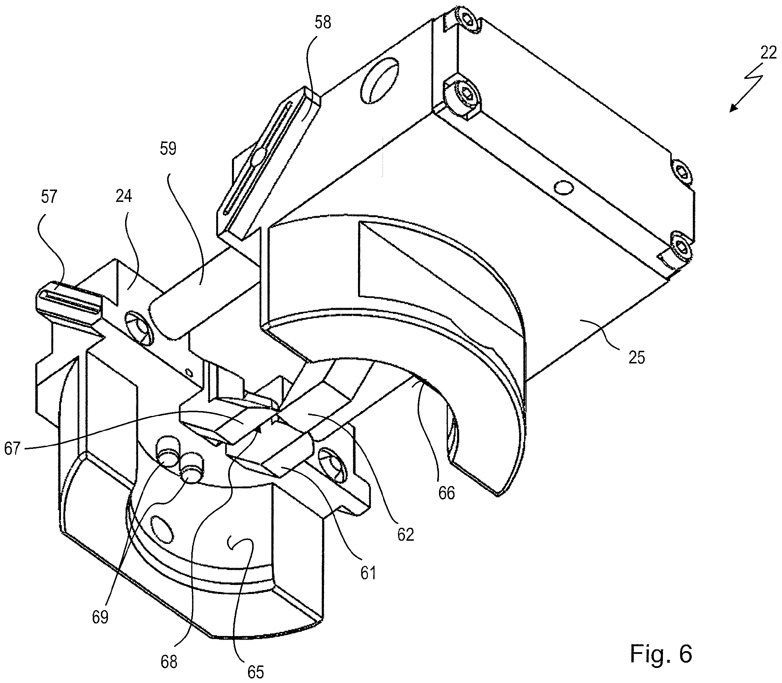

In Fig. 6 ist der Werkzeuggreifer 22 aus Fig. 5 in perspektivischer Ansicht von unten dargestellt, so dass das als Halbschale ausgebildete Formelement 65 an dem ersten Backen 24 besonders gut zu erkennen ist. Der Finger 62 an dem Backen 25 ist von unten zu erkennen, wobei an dem Backen 24 jetzt zusätzlich zu dem Finger 61 noch ein zweiter Finger 67 gezeigt ist, der identisch wie der Finger 61 aufgebaut ist.

In Fig. 6 ist ferner zu erkennen, dass die Finger 61, 62, 67 miteinander verschränkt sind, beim Zusammenfahren der Backen 24, 25 gelangt der Finger 62 zwischen die Finger 61 und 67, zwischen denen ein entsprechender Freiraum gebildet ist, der in Fig. 6 durch die Bezugsziffer 68 angedeutet ist.

Ferner sind an dem Backen 24 noch zwei Orientierungszapfen 69 zu erkennen, die nebeneinander liegend längs der Formfläche 65 verlaufen.

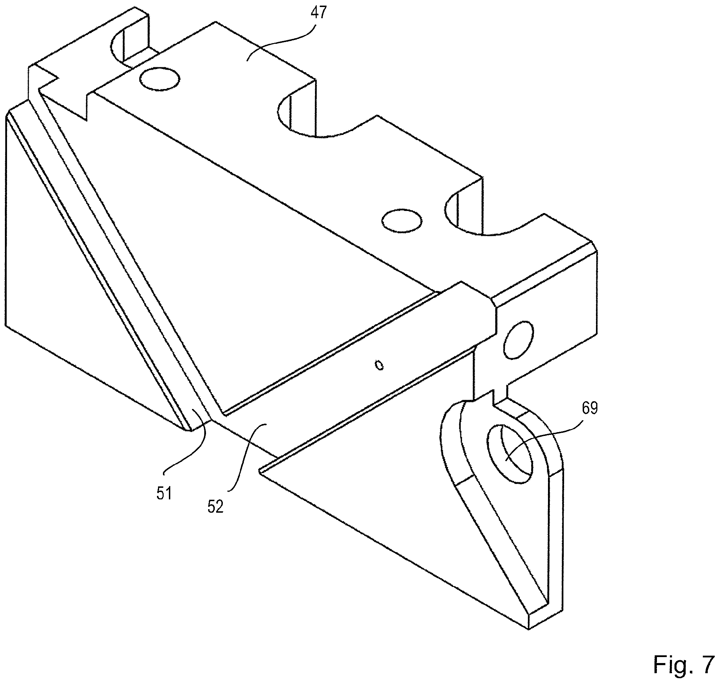

Fig. 7 zeigt in perspektivischer Darstellung die hintere Wange 47 aus Fig. 4 mit den beiden linearen Führungen 51 und 52.

Ferner ist ein Befestigungsloch 69 zu erkennen, mit dem die Wange 47 in hier nicht weiter interessierender Weise an der Tragstruktur 23 aus Fig. 4 befestigt ist.

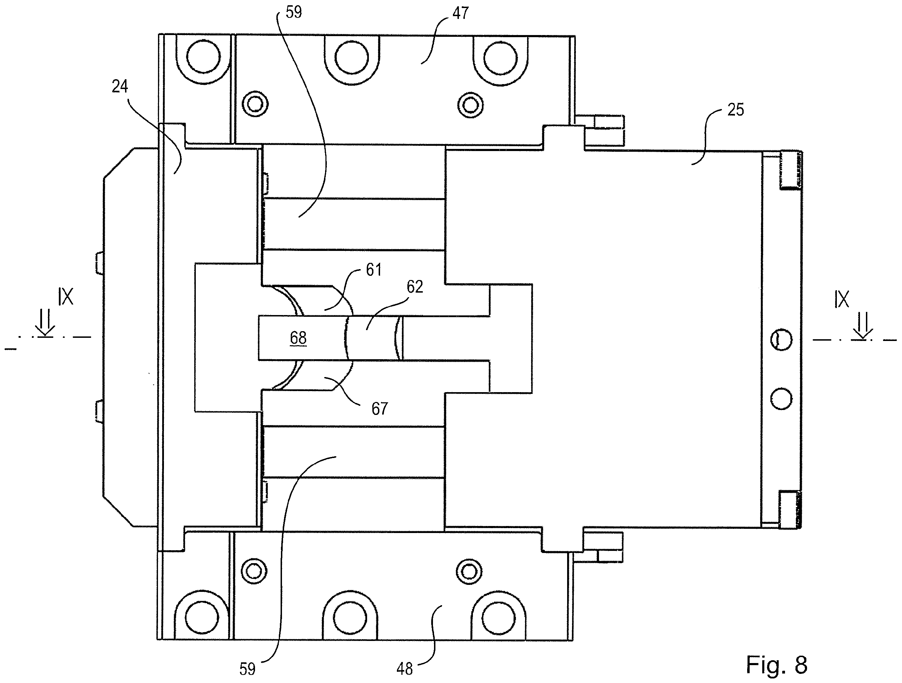

In Fig. 8 ist das konkrete Ausführungsbeispiel des Werkzeuggreifers 22 aus den Fig. 5 und 6 zusammen mit den konkreten Wangen 47, 48 gemäß Fig. 7 in einer Draufsicht gezeigt, wobei die beiden Backen 24, 25 sich in ihrer geöffneten Stellung befinden. Es ist zu erkennen, dass zwischen den beiden Stangen 59 die Finger 61, 62, 67 liegen, die derart miteinander verschränkt sind, dass der Finger 62 in den Freiraum 68 hineinragt.

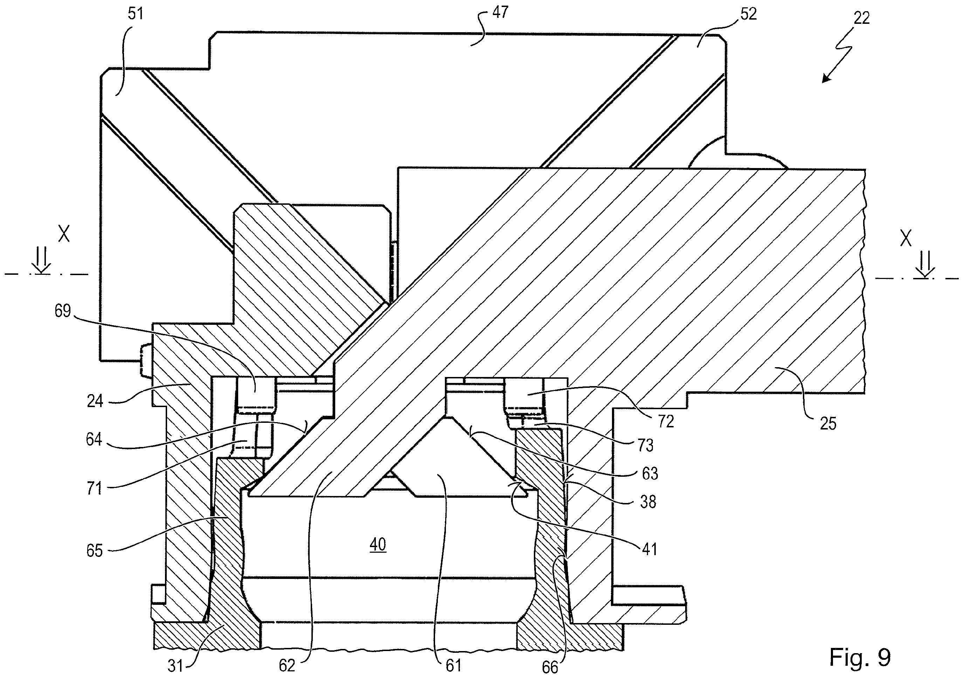

Werden die Backen 24, 25 jetzt aufeinander zugefahren, so bewegen sie sich längs der Führungen 51, 52 aufeinander zu und nach unten, so dass die Finger 61, 62, 67 in den Hohlraum 40 eingreifen, wie dies jetzt in der Schnittdarstellung der Fig. 9 gezeigt ist, die einen Schnitt längs der Linie IX-IX aus Fig. 8 zeigt.

Die Finger 61 und 62 liegen bei eingespanntem Hohlschaftkegel 31 mit ihren Schrägflächen 63 bzw. 64 an der umlaufenden Schulter 41 an, während die Formflächen 65 und 66 an der kegelförmigen Außenfläche 38 des geschnitten dargestellten Hohlschaftkegels 31 anliegen.

Ferner ist in Fig. 9 noch einer der Orientierungszapfen 69 an dem Backen 24 zu erkennen, der in eine Mitnehmernut 71 hineinragt, die in an sich bekannter Weise in dem Hohlschaftkegel 31 vorgesehen ist.

An dem Backen 25 ist vergleichbar ein Orientierungszapfen 72 vorgesehen, der in eine Mitnehmernut 73 eingreift, die ebenfalls in dem Hohlschaftkegel 31 vorgesehen ist.

Während an dem Backen 24 zwei Orientierungszapfen 69 vorgesehen sind, ist an dem Backen 25 lediglich ein Orientierungszapfen 72 vorgesehen. Damit wird der Tatsache Rechnung getragen, dass die Mitnehmernut 71 breiter ist als die Mitnehmernut 63, so dass der Hohlschaftkegl 31 nur in der in Fig. 9 gezeigten Ausrichtung von dem Werkzeuggreifer 22 erfasst und fest eingespannt werden kann. Auf diese Weise wird für eine lagerichtige Aufnahme und Übergabe eines Werkzeughalters 15 gesorgt, wie dies eingangs bereits beschrieben wurde.

Die Finger 61, 62, 67, die Formflächen 65 und 66 sowie die Orientierungszapfen 69 und 72 bilden Haltemittel, die an den Backen 24 und 25 ausgebildet sind und einen in den Werkzeuggreifer 22 eingeklemmten Werkzeughalter 15 lediglich an dem Hohlschaftkegel 31 ergreifen und halten.

Lediglich durch einen Bewegungsablauf der Backen 24, 25, in dem sie sich zum Schließen bzw. Öffnen auf einander zu bzw. voneinander weg bewegen, erfahren sie gleichzeitig mit der Bewegungskomponente B eine Bewegungskomponente A in Richtung der Längsachse 30 des Werkzeughalters 15, so dass beim Schließen die Finger 61, 62, 67 in den Hohlraum 40 eingreifen und gleichzeitig die Formflächen 65, 66 sich an die kegelförmige Außenfläche 38 anlegen. Dabei gelangen auch die Orientierungszapfen 69, 72 in Eingriff mit den Mitnehmernuten 71, 73, sofern der Werkzeughalter 15 um seine Hochachse 30 richtig zu dem Werkzeuggreifer 22 ausgerichtet ist.

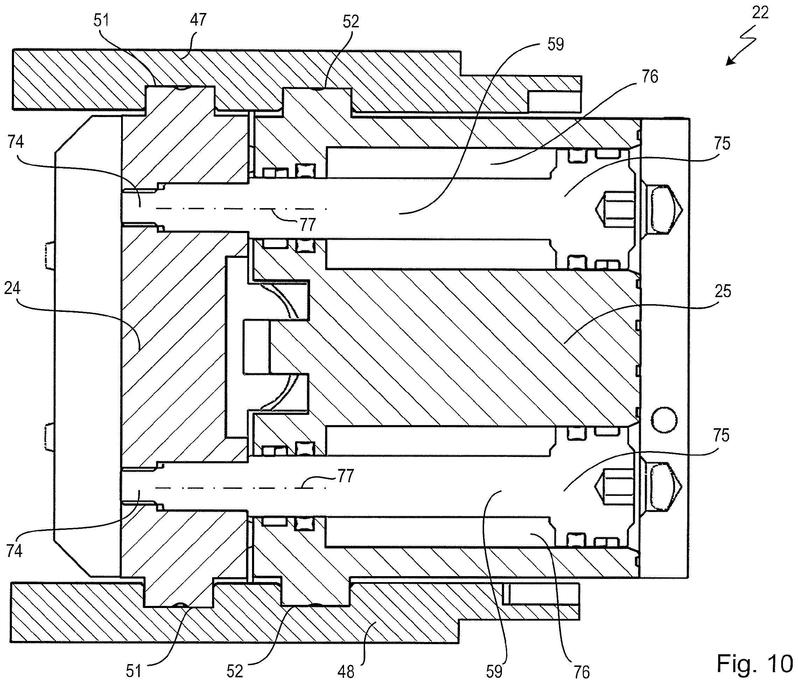

Wie das Verfahren der Backen 24, 25 zueinander bewirkt wird, wird jetzt anhand der Fig. 10 erläutert, die den Werkzeuggreifer 22 aus Fig. 9 in Draufsicht und geschnitten längs der Linie X-X darstellt.

Der Schnitt ist so gewählt, dass die Stangen 59 zu erkennen sind, die mit ihrem einen Ende 74 fest in dem Backen 24 sitzen, während sie mit ihrem anderen Ende 75, das als Kolben ausgebildet ist, in einem Tauchkolbenzylinder 76 längsverschieblich gelagert sind. Beide Stangen 59 sind somit in ihrer Längsrichtung 77 verschiebbar in dem zweiten Backen 25 gelagert.

Wenn die Stangen 49 an ihrem Ende 75 von rechts mit Druckluft oder Hydrauliköl beaufschlagt werden, so werden die Stangen 59 schlagartig aus dem Backen 25 herausgedrückt, so dass sich der Abstand zwischen den Backen 24 und 25 verändert und diese längs der Führungen 51, 52 nach oben bewegt werden. Wird im umgekehrten Fall das Ende 75 von links mit Fluid beaufschlagt, so schließen die Backen 24, 25, wobei sie sich längs der Führungen 51, 52 nach unten bewegen.

Der Tauchkolbenzylinder 76 stellt somit einen Antrieb für die Stangen 59 dar, während die Stangen 59 zusammen mit dem Tauchkolbenzylinder 76 eine Verstellvorrichtung bilden, über die die beiden Backen 24, 25 in ihrem Abstand zueinander verstellbar sind.

## Patentansprüche

1. Werkzeugmagazin mit Magazinplätzen (20, 21) für Werkzeughalter (14) und zumindest einem Werkzeuggreifer (22) für einen eine Längsachse (30) aufweisenden Werkzeughalter (14), der einen vorzugsweise mit einer Greifernut (36) versehenen Bund (32) aufweist, an dem auf einer in der Längsachse (30) unteren Seite (34) ein Bearbeitungswerkzeug (15) befestigbar ist, und an dem auf einer in der Längsachse (30) oberen Seite (33) ein Hohlschaftkegel (31) zum Einspannen des Werkzeughalters (14) in eine Werkzeugaufnahme (42) vorgesehen ist, wobei der Werkzeuggreifer (22) Haltemittel (61, 62, 67; 65, 66; 69, 72) aufweist, die einen in dem Werkzeuggreifer (22) aufgenommenen Werkzeughalter (14) an dessen Hohlschaftkegel (31) erfassen können, wobei die Haltemittel (61, 62, 67; 65, 66; 69, 70) an zumindest zwei Backen (24, 25) derart angeordnet sind, dass sie bei geschlossenen Backen (24, 25) an dem Hohlschaftkegel (31) eines von dem Werkzeuggreifer (22) gehaltenen Werkzeughalters (14) angreifen können, **dadurch gekennzeichnet,**
**dass** an zumindest einem der Backen (24, 25) zumindest ein Finger (62, 61, 67) angeordnet ist, der bei geschlossenen Backen (24, 25) von oben in den Hohlschaftkegel (31) eines von dem Werkzeuggreifer (22) gehaltenen Werkzeughalters (14) eingreifen kann, und
**dass** an zumindest einem der Backen (24, 25) eine Formfläche (65, 66), vorzugsweise eine Halbschale, vorgesehen ist, die bei geschlossenen Backen (24, 25) zumindest teilweise außen an dem Hohlschaftkegel (31) eines von dem Werkzeuggreifer (22) gehaltenen Werkzeughalters (14) anliegen kann.

2. Werkzeugmagazin nach Anspruch 1, **dadurch gekennzeichnet, dass** an einem Backen (24) ein Finger (62) und an dem anderen Backen (25) zwei Finger (61, 67) vorgesehen sind, die zwischen sich einen Freiraum (68) begrenzen, in dem sich der eine Finger (62) des einen Backens (24) bei geschlossenen Backen (24, 25) erstreckt.

3. Werkzeugmagazin nach Anspruch 1 oder 2, **dadurch gekennzeichnet, dass** an zumindest einem der Backen (24, 25) zumindest ein Orientierungszapfen (69, 72) angeordnet ist, der bei geschlossenen Backen (24, 25) in eine Mitnehmernut (71, 73) eingreifen kann, die an dem Hohlschaftkegel (31) eines von dem Werkzeuggreifer (22) gehaltenen Werkzeughalters (14) vorgesehen ist.

4. Werkzeugmagazin nach einem der Ansprüche 1 bis 3, **dadurch gekennzeichnet, dass** zwei Backen (24, 25) vorgesehen sind, die derart angeordnet sind, dass sie beim Öffnen und Schließen den Bewegungsablauf (B, A) ausführen, bei dem die Backen (24, 25) ihren Abstand (26) zueinander und ihre Lage parallel zu der Längsachse 30 eines aufgenommenen Werkzeughalters (14) verändern.

5. Werkzeugmagazin nach Anspruch 4, **dadurch gekennzeichnet, dass** für die vorzugsweise verschiebbar zwischen zwei Wangen (47, 48) geführten Backen (24, 25) Führungen (51, 52) vorgesehen sind, die beim Verschieben der Backen (24, 25) den Bewegungsablauf (B, A) der Backen (24, 25) bewirken, die dabei ihren Abstand (26) zueinander und ihre Lage parallel zu der Längsachse 30 eines aufgenommenen Werkzeughalters (14) verändern.

6. Werkzeugmagazin nach Anspruch 5, **dadurch gekennzeichnet, dass** der oder jeder Finger (61, 62, 67) eine Längsrichtung (53, 54) aufweist, die schräg, vorzugsweise unter einem Winkel (55, 56) zwischen 40° und 50°, z u der Längsachse (30) eines von dem Werkzeuggreifer (22) gehaltenen Werkzeughalters (14) auf diesen zu verläuft.

7. Werkzeugmagazin nach Anspruch 5 oder 6, **dadurch gekennzeichnet, dass** die Führungen (51, 52) lineare Führungen sind, die schräg, vorzugsweise unter einem Winkel (55, 56) zwischen 40° und 50°, zu der Längsa chse (30) eines von dem Werkzeuggreifer (22) gehaltenen Werkzeughalters (14) auf diesen zu verlaufen.

8. Werkzeugmagazin nach einem der Ansprüche 1 bis 7, **dadurch gekennzeichnet, dass** zumindest einem der beiden Backen (24, 25) zumindest eine Verstellvorrichtung (59, 76) zugeordnet ist, über die die beiden Backen (24, 25) in ihrem Abstand (26) zueinander verstellbar sind.

9. Werkzeugmagazin nach Anspruch 8, **dadurch gekennzeichnet, dass** die Verstellvorrichtung (59, 76) eine Stange (59) umfasst, die an ihrem einen Ende (75) in ihrer Längsrichtung (77) verschiebbar an einem der Backen (25) gelagert ist, und an ihrem anderen Ende (74) fest mit dem anderen Backen (24) verbunden ist.

10. Werkzeugmagazin nach Anspruch 8 oder 9, **dadurch gekennzeichnet, dass** die Verstellvorrichtung (59, 76) einen Antrieb (76) aufweist, die an einem der beiden Backen (24, 25) angeordnet ist.

11. Werkzeugmagazin nach Anspruch 9 und 10, **dadurch gekennzeichnet, dass** der Antrieb (76) einen vorzugsweise doppelt wirkenden Tauchkolbenzylinder umfasst, und dass die Stange (59) als Kolbenstange ausgebildet und mit ihrem einen Ende (75) in dem Tauchkolbenzylinder geführt ist.

12. Werkzeugmagazin nach einen der Ansprüche 1 bis 11, **dadurch gekennzeichnet, dass** der Werkzeuggreifer (22) an einer Tragstruktur (23) montiert ist, die zwischen einer Magazinposition (28), in der der Werkzeughalter (14) zwischen dem Werkzeuggreifer (22) und einem Magazinplatz (20, 21) übergebbar ist, und einer Bestückungsposition (46) hin- und herbewegbar ist, die der Bestückung der Magazinplätze (20, 21) mit Werkzeughaltern (14) dient.

13. Werkzeugmagazin nach einem der Ansprüche 1 bis 12, **dadurch gekennzeichnet, dass** der Werkzeuggreifer (22) an einer Treibstruktur (23) montiert ist, die zwischen einer Magazinposition (28), in der ein Werkzeughalter (14) zwischen den Werkzeuggreifer (22) und einem Magazinplatz (20, 21) übergebbar ist, und einer Wechselposition (29) hin- und herbewegbar ist, in der ein Werkzeughalter (14) zwischen den Werkzeuggreifer (22) und einem Maschinengreifer (13) oder einem Maschinenmagazin (43) übergebbar ist.

14. Werkzeugmaschine mit einer Werkzeugaufnahme (42) zum Einspannen von Bearbeitungswerkzeugen (15) für die Bearbeitung von Werkstücken (16), einem Maschinengreifer (13) oder Maschinenmagazin (43), und einem Werkzeugmagazin nach einem der Ansprüche 1 bis 13.

## Claims

1. A tool magazine comprising magazine places (20, 21) for tool holders (14) and at least one tool gripper (22) for a tool holder (14) that comprises a longitudinal axis (30), and that comprises a collar (32), which is preferably provided with a gripping groove (36), to which a machining tool (15) can be fastened on a lower side (34) along the longitudinal axis (30), and at which a hollow shaft cone (31) is provided on an upper side (33) along the longitudinal axis (30) for clamping the tool holder (14) into a tool receptacle (42), wherein the tool gripper (22) comprises holding means (61, 62, 67; 65, 66; 69, 72) that are arranged for holding a tool holder (14) accommodated in the tool gripper (22) at its hollow shaft cone (31), wherein the holding means (61, 62, 67; 65, 66; 69, 70) are arranged on at least two jaws (24, 25) in such a way that, when the jaws (24, 25) are closed, they can engage the hollow shaft cone (31) of a tool holder (14) held by the tool gripper (22),
**characterized in that**
at least one finger (62, 61, 67) is arranged on at least one of the jaws (24, 25) and, when the jaws (24, 25) are closed, can engage from above the hollow shaft cone (31) of a tool holder (14) that is held by the tool gripper (22), and
a shaped surface (65, 66), preferably a half-shell, is provided on at least one of the jaws (24, 25), which, when the jaws (24, 25) are closed, can rest at least partially externally on the hollow shaft cone (31) of a tool holder (14) that is held by the tool gripper (22).

2. The tool magazine according to claim 1, **characterized in that** one finger (62) is provided on one jaw (24), and **in that** two fingers (61, 67) are provided on the other jaw (25), which therebetween delimit a clearance space (68) in which the one finger (62) of the one jaw (24) extends when the jaws (24, 25) are closed.

3. The tool magazine according to one of claim 1 or 2, **characterized in that** at least one orientation pin (69, 72) is arranged on at least one of the jaws (24, 25), which orientation pin, when the jaws (24, 25) are closed, can engage in a driving groove (71, 73) which is provided on the hollow shaft cone (31) of a tool holder (14) held by the tool gripper (22).

4. The tool magazine according to one of claims 1 to 3, **characterized in that** two jaws (24, 25) are provided which are arranged in such a way that they execute the movement sequence (B, A) during opening and closing, in which the jaws (24, 25) change their distance (26) from one another and their position parallel to the longitudinal axis 30 of a an accommodated tool holder (14).

5. The tool magazine according to claim 4, **characterized in that** guides (51, 52) are provided for the jaws (24, 25), which are preferably slidable between two cheeks (47, 48), which guides, when the jaws (24, 25) are displaced, effect the movement sequence (B, A) of the jaws (24, 25), which in this way change their distance (26) from one another and their position parallel to the longitudinal axis 30 of an accommodated tool holder (14).

6. The tool magazine according to claim 5, **characterized in that** the or each finger (61, 62, 67) comprises a longitudinal direction (53, 54) which extends obliquely, preferably at an angle (55, 56) of between 40° and 50°, with respect to the longitudinal axis (30) of a tool holder (14) held by the tool gripper (22) towards the tool holder (14).

7. The tool magazine according to one of claim 5 or 6, **characterized in that** the guides (51, 52) are linear guides which extend obliquely, preferably at an angle (55, 56) of between 40° and 50°, with respect to the longitudinal axis (30) of a tool holder (14) held by the tool gripper (22) towards the tool holder (14).

8. The tool magazine according to one of claims 1 to 7, **characterized in that** at least one adjusting device (59, 76) is assigned to at least one of the two jaws (24, 25), by means of which the distance (26) between the two jaws (24, 25) can be adjusted.

9. The tool magazine according to claim 8, **characterized in that** the adjusting device (59, 76) comprises a rod (59) which is at one end (75) thereof mounted displaceably in its longitudinal direction (77) on one of the jaws (25), and which is at its other end (74) fixedly connected to the other jaw (24).

10. The tool magazine according to one of claims 8 or 9, **characterized in that** the adjusting device (59, 76) comprises a drive (76) which is arranged on one of the two jaws (24, 25).

11. The tool magazine according to one of claims 9 and 10, **characterized in that** the drive (76) comprises a preferably double-acting plunger piston cylinder, and **in that** the rod (59) is arranged as a piston rod and guided with its one end (75) in the plunger piston cylinder.

12. The tool magazine according to one of claims 1 to 11, **characterized in that** the tool gripper (22) is mounted on a support structure (23) which can be moved back and forth between a magazine position (28), in which the tool holder (14) can be transferred between the tool gripper (22) and a magazine location (20, 21), and a loading position (46), which serves to load the magazine locations (20, 21) with tool holders (14).

13. The tool magazine according to one of claims 1 to 12, **characterized in that** the tool gripper (22) is mounted on a drive structure (23) which can be moved back and forth between a magazine position (28), in which a tool holder (14) can be transferred between the tool gripper (22) and a magazine location (20, 21), and an alternating position (29), in which a tool holder (14) can be transferred between the tool gripper (22) and a machine gripper (13) or a machine magazine (43).

14. A machine tool comprising a tool receptacle (42) for clamping machining tools (15) for machining workpieces (16), a machine gripper (13) or machine magazine (43), and a tool magazine in accordance with any one of claims 1 to 13.

## Revendications

1. Magasin à outils comprenant des emplacements de magasin (20, 21) pour des porte-outils (14) et au moins un préhenseur d'outil (22) pour un porte-outil (14), lequel possède un axe longitudinal (30) et possède un épaulement (32) de préférence pourvu d'une rainure de préhenseur (36), auquel peut être fixé un outil d'usinage (15) sur un côté inférieur (34) dans l'axe longitudinal (30), et au niveau duquel, sur un côté supérieur (33) dans l'axe longitudinal (30), se trouve un cône creux HSK (31) destiné au serrage du porte-outil (14) dans un attachement d'outil (42), le préhenseur d'outil (22) possédant des moyens de maintien (61, 62, 67 ; 65, 66 ; 69, 72) qui peuvent saisir un porte-outil (14) accueilli dans le préhenseur d'outil (22) au niveau de son cône creux HSK (31),
les moyens de maintien (61, 62, 67 ; 65, 66 ; 69, 72) étant disposés au niveau d'au moins deux mâchoires (24, 25) de telle sorte que lorsque les mâchoires (24, 25) sont fermées, il peuvent être appliqués au niveau du cône creux HSK (31) d'un porte-outil (14) maintenu par le préhenseur d'outil (22),
**caractérisé en ce**
**qu'**au moins un doigt (62 ; 61, 67) est disposé au niveau d'au moins l'une des mâchoires (24, 25) qui, lorsque les mâchoires (24, 25) sont fermées, peut venir en prise par le haut dans le cône creux HSK (31) d'un porte-outil (14) maintenu par le préhenseur d'outil (22) et
**qu'**une face façonnée (65, 66), de préférence une demie coque, se trouve au niveau d'au moins l'une des mâchoires (24, 25) qui, lorsque les mâchoires (24, 25) sont fermées, peut reposer au moins partiellement à l'extérieur sur le cône creux HSK (31) d'un porte-outil (14) maintenu par le préhenseur d'outil (22).

2. Magasin à outils selon la revendication 1, **caractérisé en ce qu'**un doigt (62) se trouve sur une mâchoire (24) et deux doigts (61, 67) sur l'autre mâchoire (25), lesquels délimitent entre eux un espace libre (68) dans lequel s'étend ledit doigt (62) de ladite mâchoire (24) lorsque les mâchoires (24, 25) sont fermées.

3. Magasin à outils selon la revendication 1 ou 2, **caractérisé en ce qu'**au moins un tenon d'orientation (69, 72) est disposé sur au moins l'une des mâchoires (24, 25) qui, lorsque les mâchoires (24, 25) sont fermées, peut venir en prise dans une rainure d'élément d'entraînement (71, 73) qui se trouve sur le cône creux HSK (31) d'un porte-outil (14) maintenu par le préhenseur d'outil (22).

4. Magasin à outils selon l'une des revendications 1 à 3, **caractérisé en ce que** deux mâchoires (24, 25) sont présentes, lesquelles sont disposées de telle sorte que lors de l'ouverture et de la fermeture elles accomplissement la séquence de mouvements (B, A) au cours de laquelle les mâchoires (24, 25) modifient leur écart (26) l'une de l'autre et leur position parallèle à l'axe longitudinal (30) d'un porte-outil (14) accueilli.

5. Magasin à outils selon la revendication 4, **caractérisé en ce que** des guides (51, 52) sont présents pour les mâchoires (24, 25), de préférence guidées entre deux joues (47, 48), lesquels produisent la séquence de mouvements (B, A) des mâchoires (24, 25) lors du déplacement des mâchoires (24, 25), lesquelles modifient alors leur écart (26) l'une de l'autre et leur position parallèle à l'axe longitudinal (30) d'un porte-outil (14) accueilli.

6. Magasin à outils selon la revendication 5, **caractérisé en ce que** le ou chaque doigt (61, 62, 67) possède une direction longitudinale (53, 54) qui s'étend en biais vers un porte-outil (14) maintenu par le préhenseur d'outil (22), de préférence sous un angle (55, 56) compris entre 40° et 50°, par rapport à l'axe longitudinal (30) dudit porte-outil (14).

7. Magasin à outils selon la revendication 5 ou 6, **caractérisé en ce que** les guides (51, 52) sont des guides linéaires qui s'étendent en biais vers un porte-outil (14) maintenu par le préhenseur d'outil (22), de préférence sous un angle (55, 56) compris entre 40° et 50°, par rapport à l'axe longitudinal (30) dudit porte-outil (14).

8. Magasin à outils selon l'une des revendications 1 à 7, **caractérisé en ce qu'**au moins un dispositif de positionnement (59, 76) est associé à au moins l'une des deux mâchoires (24, 25), par le biais duquel l'écart (26) entre les deux mâchoires (24, 25) peut être réglé.

9. Magasin à outils selon la revendication 8, **caractérisé en ce que** le dispositif de positionnement (59, 76) comporte une tige (59) qui est supportée de manière coulissante dans sa direction longitudinale (77) sur l'une des mâchoires (25) par l'une de ses extrémités (75) et est reliée à demeure avec l'autre mâchoire (24) par son autre extrémité (74).

10. Magasin à outils selon la revendication 8 ou 9, **caractérisé en ce que** le dispositif de positionnement (59, 76) possède un mécanisme d'entraînement (76) qui est disposé au niveau de l'une des deux mâchoires (24, 25).

11. Magasin à outils selon les revendications 9 et 10, **caractérisé en ce que** le mécanisme d'entraînement (76) comporte un vérin à piston plongeur de préférence à double effet, et **en ce que** la tige (59) est réalisée sous la forme d'une tige de piston et est guidée dans le vérin à piston plongeur par l'une de ses extrémités (75).

12. Magasin à outils selon l'une des revendications 1 à 11, **caractérisé en ce que** le préhenseur d'outil (22) est monté sur une structure porteuse (23) qui peut être déplacée en alternance entre une position de magasin (28), dans laquelle le porte-outil (14) peut être transféré entre le préhenseur d'outil (22) et un emplacement de magasin (20, 21), et une position de garniture (46), qui sert à la garniture des emplacements de magasin (20, 21) avec des porte-outils (14).

13. Magasin à outils selon l'une des revendications 1 à 12, **caractérisé en ce que** le préhenseur d'outil (22) est monté sur une structure motrice (23) qui peut être déplacée en alternance entre une position de magasin (28), dans laquelle le porte-outil (14) peut être transféré entre le préhenseur d'outil (22) et un emplacement de magasin (20, 21), et une position de changement (29) dans laquelle le porte-outil (14) peut être transféré entre le préhenseur d'outil (22) et un préhenseur de machine (13) ou un magasin de machine (43).

14. Machine-outil équipée d'un attachement d'outil (42) servant au serrage d'outils d'usinage (15) pour l'usinage de pièces (16), un préhenseur de machine (13) ou un magasin de machine (43) et un magasin à outils selon l'une des revendications 1 à 13.
